# EUROPEAN PATENT SPECIFICATION

(11) **EP 0 827 868 B1**
(45) Date of publication and mention of the grant of the patent: **12.04.2000**
(21) Application number: 97112689.1
(22) Date of filing: 24.07.1997
(51) Int. Cl.: B60R 13/04

(54) **A knock-dampening device for a motor vehicle door**
Dämpfervorrichtung für Kraftfahrzeugtür
Dispositif amortisseur pour porte de véhicule

(30) Priority: 10.09.1996 IT TO960180 U
(43) Date of publication of application: 11.03.1998
(73) Proprietor: FIAT AUTO S.p.A., 10135 Torino (IT)
(72) Inventor: Bertinotti, Simone, 10050 Coazze (Torino) (IT)
(74) Representative: Di Francesco, Gianni

(56) References cited:
- EP-A- 0 249 420
- FR-A- 2 188 664
- US-A- 3 667 163

## Description

The present invention relates to a knock-dampening device for a motor vehicle door, in particular for preventing the paint on the edge of the door from being damaged by knocking against an obstacle near to the vehicle when opening the door.

There are known prior art devices adapted for protecting the edge of a vehicle door from being damaged (see US-A- 3 667 163). These devices mainly consist of a U-shaped strip of elastomeric material adapted to be forcefully slipped on the edge of the door. In most cases, the pressure exerted by the two edges of the strip on the edge of the door is no sufficient to keep the strip in position, so that it is necessary to add some glue within the strip to secure it more firmly. With time, this may be detrimental to the aspect of the paint, should the elastomeric strip be removed from the door for any reason. Moreover, the door fitted with the elastomeric strip is not attractive from an aesthetic point of view, owing to the fact that often the owner has to choose a strip of a colour contrasting with that of the door because a strip of the same colour is seldom available.

It is an object of the present invention to provide a knock-dampening device capable of overcoming the above prior art drawbacks.

To meet this and other objects, the present invention provides a knock-dampening device for a motor vehicle door, characterised by consisting of an insert of rubber-like material so shaped as to form the end portion, proximate to the edge of the door, of a frame surrounding the door handle.

A further advantage of the present invention lies in that the handle frame is thicker at its end near to the edge of the door than at it opposite end.

Further characteristics and advantages of a preferred but not limiting embodiment of the device according to the invention are described hereinafter with reference to the accompanying drawings, in which:
- FIG. 1: is a front view of a vehicle door handle fitted with the device of this invention; and
- FIG. 2: illustrates the operation of the device of this invention.

With reference to the drawings, numeral 1 designates the door of a motor vehicle having an edge 2 that opens in use towards the outside.

The door has a lock 4 and a handle 6 for opening and closing the door. Around handle 6 there is disposed a frame 8 with protective and aesthetic features. Preferably, the frame 8 is made of plastic material to be light and of low cost; however, still within the scope of this invention, the frame 8 may be made of any other suitable material.

At its side facing the edge of the door, the frame 8 has a thicker section providing a seat 10, in this example of semicircular shape, adapted to accommodate an insert 12 of elastomeric material or rubber. The insert 12 is so shaped as to form an extension of the frame, in such manner that the insert and the frame as a unit have a pleasant aspect.

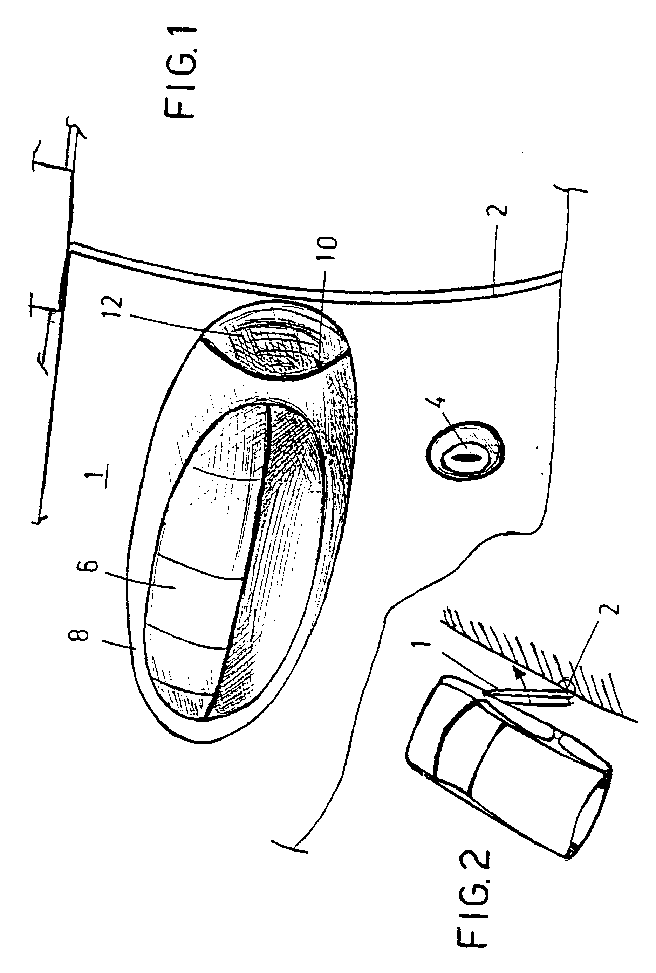

Obviously, the insert 12 will be fixed to the frame 8 in known manner, i.e. by gluing, co-moulding or by means of a fastening bolt having its head (not shown) contained within the outer contour of the insert. Further, the contour of the insert will extend proximate to the edge of the door, so as to accomplish its knock-dampening task in the best possible way, as schematically illustrated in FIG. 2.

## Claims

1. A knock-dampening device for a motor vehicle door (1), characterised by consisting of an insert (12) of rubber-like material so shaped as to form the end portion, proximate to the edge (2) of the door (1), of a frame (8) surrounding the door handle (6).

2. A knock-dampening device according to claim 1, characterised in that the handle frame (8) is thicker at its end near to the edge (2) of the door (1) than at it opposite end.

3. A knock-dampening device according to claim 1, characterised in that said frame (8) is provided with a seat (10) for fixing said insert (12).

## Patentansprüche

1. Dämpfervorrichtung für eine Kraftfahrzeugtür (1),
dadurch gekennzeichnet,
daß sie aus einer Einlage (12) aus gummiartigem Material besteht, die so geformt ist, daß sie nahe der Kante (2) der Tür (1) den Endbereich eines Rahmens (8) bildet, der den Türgriff (6) umgibt.

2. Dämpfervorrichtung nach Anspruch 1,
dadurch gekennzeichnet,
daß der Griffrahmen (8) an seinem Ende nahe der Kante (2) der Tür (1) dicker ist als an seinem gegenüberliegenden Ende.

3. Dämpfervorrichtung nach Anspruch 1,
dadurch gekennzeichnet,
daß der Rahmen (8) zur Befestigung der Einlage (12) mit einem Sitz (10) ausgestattet ist.

## Revendications

1. Dispositif amortisseur pour porte de véhicule (1), caractérisé en ce qu'il est constitué d'un élément rapporté (12) réalisé dans un matériau tel que du caoutchouc et présentant une forme lui permettant de former la partie d'extrémité, à proximité du bord (2) de la porte (1), d'un châssis (8) entourant la poignée de porte (6).

2. Dispositif amortisseur de porte selon la revendication 1, caractérisé en ce que le châssis de poignée (8) est plus épais à son extrémité proche du bord (2) de la porte (1) qu'à son extrémité opposée.

3. Dispositif amortisseur de porte selon la revendication 1, caractérisé en ce que ledit châssis (8) est muni d'une face d'appui (10) pour fixer ledit élément rapporté (12).
